# EUROPÄISCHE PATENTSCHRIFT

(11) **EP 1 528 967 B1**
(45) Veröffentlichungstag und Bekanntmachung des Hinweises auf die Patenterteilung: **01.06.2011**
(21) Anmeldenummer: 02807726.1
(22) Anmeldetag: 14.08.2002
(51) Int. Cl.: B23K 11/25

(54) **PUNKTSCHWEISS-STEUERVORRICHTUNG UND -STEUERVERFAHREN**
DEVICE AND METHOD FOR RESISTANCE SPOT WELDING CONTROL
DISPOSITIF ET PROCEDE DE COMMANDE DE SOUDAGE PAR POINTS

(43) Veröffentlichungstag der Anmeldung: 11.05.2005
(73) Patentinhaber: Reu-Schweisstechnik GmbH, 34225 Baunatal (DE)
(72) Erfinder: KAESELER, Werner, 34225 Baunatal (DE); MÜLLER, Horst, 34225 Baunatal (DE)
(74) Vertreter: Hanewinkel, Lorenz
(86) Internationale Anmeldenummer: PCT/EP2002/009446
(87) Internationale Veröffentlichungsnummer: WO 2004/018140

(56) Entgegenhaltungen:
- EP-A- 0 569 831
- EP-A- 1 118 417
- WO-A-00/71291
- WO-A-01/58636
- DE-A- 4 302 457
- DE-A- 19 524 486
- US-A- 5 254 828
- US-A1- 2001 045 413

## Beschreibung

Die Erfindung betrifft eine Steuervorrichtung zum Punktschweißen mit einer Schweißzange, deren Schweißelektroden an Zangenarmen gehalten und mit einem Schweißstromgeneratorverbunden sind, und die durch einen elektromotorischen Antrieb, an dem ein Resolver (RES) angeordnet ist, mit dessen Signalen von einer Steuervorrichtung die Schweißzange Vorgaben gemäß auf und zu zu steuern ist, und wobei im geschlossenen Zustand der Schweißzange diese zwischen den Schweißelektroden Schweißobjekte durch einen vorgegebenen Motorstrom zusammengepresst hält, wobei der Schweißstromgenerator von der Steuervorrichtung zeitweilig aktiviert ist, und die Steuervorrichtung Überwachungsvorrichtungen umfasst, denen die Resolversignale und/oder ein Motorstrom-Messsignal laufend zugeführt werden und dass an dem Spindelgetriebe abtriebsseitig ein Drucksensor angeordnet ist, dessen Drucksignal analog-digital gewandelt, gefiltert und normiert auch der Überwachungsvorrichtung zugeführt wird, die die zugeführten Signale bezüglich ihres zeitlichen Verlaufs analysiert und zur Steuerung des Schweißstromgenerators nutzt, sobald diese Überwachungsvorrichtung nach einer ZU-Steuerung der Schweißzange eine Quasikonstanz erkennt, sie einen entsprechenden erster Zustand als den geschlossenen Zustand speichert und den Schweißstromgenerator aktiviert, sobald danach die Überwachungsvorrichtung das Überschreiten eines Maximums signalisiert, einen anschließenden weiteren geschlossenen Zustand speichert, indem sie den Schweißstromgenerator deaktiviert und einen Haltezeitgeber aktiviert, bei dessen Ablauf der weitere geschlossene Zustand beendet ist und die Auf- und Zu-Steuerung wieder freigegeben ist.

Aus der WO 01 58636 A ist eine derartige Schweiß-Steuervorrichtung bekannt. Diese benötigt zur Gewinnung brauchbarer Meldesignale, die der Steuerung des Schweißprozesses dienen, insbesondere bei der Schweißung dünner Bleche, deren Dickenänderung an der Schweißstelle beim Schweißvorgang nur entsprechend gering ist, relativ steife Zangenarme.

Weiterhin ist aus der EP 1 118 417A eine Punktschweiß-Steuervorrichtung bekannt, bei der entweder ein Drucksensor an einem Elektrodenpositionierer mit sehr steifen Zangenarmen oder ein Verformungssensor an einem relativ schwachen Elektrodenzangenarm aneordnet ist. Während des Schweißvorganges wird die Dickenänderung der Schweißstelle dadurch bestimmt, daß die gemessene Druckkraft bzw. die gemessene Verformung mit einer Federkonstanten der Zangenanordnung multipliziert wird. Einflüsse des Motors und des Getriebes, die auch im Kraftfluß liegen, die während der Messung auf die Zangenkraft auftreten, bleiben unberücksichtigt, was zu Fehlmessungen führen kann.

Weiterhin ist aus der US 2001/045413A1 eine Punktschweißzange bekannt, deren erster Zangenarm an einem Positionierroboter gehalten ist, eine erste Federkonstante aufweist und einen ersten Beanspruchungssensor enthält und deren zweiter Zangenarm eine zweite Federkonstante aufweist und einen zweiten Beanspruchungssensor enthält,und mit der Schweißelektrode über einen elektromotorischen Positionierantrieb, der einen Stellunggeber trägt, verbunden ist. Die Signale der beiden Beanspruchungssensoren, die Kraft- oder Biegesensoren sind, werden auf die Federkonstanten normiert. Das Signal des Stellungsgebers wird zusammen mit den normierten Signalen einer Steuervorrichtung des Motors zugeführt, und zusammen dienen diese Signale zudem zur Ermittlung der Dicke der Schweißstelle zwischen den Schweißelektroden zwecks einer Schweißprozeßsteuerung. Längenänderungen, die im hemmungsbehafteten hochbelasteten Getriebe während des Schweißens auftreten können, verfälschen die Dickenmessung und bringen Störungen der Prozeßsteuerung.

Die Widerstandspunktschweißung wird, insbesondere im Automobilbau, zum Verbinden von Blechen je einer Dicke von 0,5 bis 3,5 mm eingesetzt. Die Schweißelektroden pressen diese Bleche im Schweißbereich zusammen, so daß drei Stromübergangsbereiche hintereinandergeschaltet sind, wovon zwei die Berührungsflächen der gekühlten Elektroden mit dem angrenzenden Blech sind und einer von Blech zu Blech besteht. Für eine gute Schweißung soll der Widerstand von Blech zu Blech möglichst groß im Vergleich zu den Widerständen an den Elektroden-Aufsatzflächen sein, damit die Elektroden an der Oberfläche, der Bleche insbesondere wenn sie mit einer galvanischen Schutzschicht versehen sind, nicht anschmelzen und anlegieren und andererseits zwischen den Blechen sich ein linsenförmiger Schmelzbereich ausbildet.
Der Schmelzbereich soll die Bleche weitgehend durchsetzen aber nicht oberflächlich neben der Elektrode oder seitlich zwischen den Blechen aufbrechen, damit keine Materialspritzer austreten und eine fast durchgehende volle Verbindung nach dem Abkühlen der Schweißstelle besteht.
Die Vermeidung von Funken und Spritzern hat auch den großen Vorteil, daß keine Verschmutzung an den Schweißobjekten und - geräten entstehen und Reinigungs-, Wartungs- und Nacharbeitszeit eingespart werden sowie Spritzschutzvorrichtungen an den Anlagen entbehrlich sind.

Es ist Aufgabe der Erfindung, die eingangs bezeichnete Vorrichtung zum gesteuerten Schweißen in ihrem dynamischen Verhalten zu verbessern und auch für das Schweißen von sehr dünnen Blechen auch bei der Verwendung von relativ elastischen Schweißzangenarmen herzurichten.

Die Lösung besteht darin, dass die Schweißelektroden jeweils von einem Zangenarm gehalten sind, an mindestens einem davon ein Biegesensor angeordnet ist, dessen Biegemesssignal digital-analog gewandelt, gefiltert und normiert auch der Überwachungsvorrichtung zugeführt wird, und ein Summensignal aus dem normierten Druckmesssignal, dem Resolversignal, dem normierten Strommesssignal und dem normierten Biegemesssignal in der Überwachungsvorrichtung gebildet wird.

Vorteilhafte Ausgestaltungen sind in den Unteransprüchen angegeben.

Der elektrische Stellkreis für die Elektrodenbewegung und den Elektrodenandruck weist ein externes Sollsignal auf, mit dem der Strom bestimmt wird, der letztlich vom Motor ausgehend über die mechanischen Koppelelemente die Zangenbetätigung und den Elektrodenandruck erbringt.

Ändert sich die Dicke des Schweißobjektes durch den Schweißstrom, so wird bei einer konstanten Stromeinspeisung des Motors eine Wegänderung vom Wegsignalgeber signalisiert, die der Schweißstromsteuerung dient.

Ist alternativ der Motorsteuerung, nachdem eine bestimmte Andruckkraft gemäß einem bestimmten Motorstrom erreicht ist, eine Konstanthaltung der Elektrodendistanz vorgegeben, so steigt der entsprechend geregelte Motorstrom abhängig von der zunehmenden thermischen Dehnkraft durch den Schweißvorgang an, und dessen zeitlicher Verlauf dient zur Schweißstromsteuerung.

Eine Kombination des Wegsignalverlaufes und des Motorstromverlaufes läßt sich vorteilhaft zur Schweißstromsteuerung verwenden, und eine zeitliche Folge der beiden Alternativen läßt sich vorteilhaft nutzen, wenn die Regelbezugsgröße variiert wird, indem z. B. anfangs die Wegkonstanzsteuerung genutzt wird, wobei die Stromänderung beobachtet wird und gemäß einer Grenzwertvorgabe, auf eine Stromkonstanzregelung übergegangen wird, wobei die Wegsignaländerung beobachtet wird. Die jeweils für eine optimale Schweißung zu wählenden Parameter hängen von den zu verschweißenden Materialien, deren Oberflächeneigenschaften und beschichtungen, dem Elektrodenzustand und den Geometrien der Objekte und Elektroden ab. Vorteilhaft werden die beiden Signaländerungen die des Weges und die des Stromes kombiniert miteinander ausgewertet.

Zudem ist an dem Spindelgetriebe abtriebsseitig ein Drucksensor angeordnet, dessen Druckmeßsignal analog-digital gewandelt, gefiltert und normiert ebenfalls der Überwachungsvorrichtung zugeführt ist, welche auch dieses bezüglich seines zeitlichen Verlaufs analysiert zu einer Steuerung des Schweißstromgenerators nutzt.

Diese Ausgestaltung erlaubt den Einsatz von mit einer gewissen Hemmung und mit Unstetigkeiten arbeitenden hochbelastbaren Spindelgetrieben. Eine Getriebehemmung hat keine störende Auswirkung auf die Schweißung.

Zusätzlich ist ein Biegesensor im Schweißarm an einer Zone hoher Biegemomente installiert und auch dessen Meßsignal entsprechend auf die anderen Ist-Größen, die Strom-, Weg-, Druckmeßsignale, normiert der Überwachungsvorrichtung und dem Regler zugeführt.

Der elektrische Stellkreis für die Elektrodenbewegung und den Elektrodenandruck weist ein externes Sollsignal auf, mit dem der Strom bestimmt wird, der letztlich vom Motor ausgehend über die üblichen mechanischen Koppelelemente, ein Spindelgetriebe und ggf. ein Winkelhebelgetriebe, die Zangenbetätigung und den Elektrodenandruck erbringt.

Der Motorsteuerung ist, nachdem beim Zusammenfahren der Elekroden eine bestimmte Andruckkraft gemäß einem bestimmten Strom erreicht ist, eine Konstanthaltung der Motorstellung vorgegeben. Ändert sich anschließend die Dicke des Schweißobjektes durch den Schweißstrom, so steigt, soweit das Getriebe die Rückwirkung weiterleitet, der entsprechend geregelte Motorstrom abhängig von der zunehmenden thermischen Dehnkraft an. Der Anteil des durch die Dehnkraft am schweißarmseitigen Ende des Spindelgetriebes auftretende Druck, der durch eine Getriebehemmung sich aufbaut, wird von dem Druckmelder erfaßt. Falls die Getriebehemmung sehr groß ist und zuverlässig auftritt, genügt das Drucksignal am Drucksignalgeber allein zu einer Schweißsteuerung. Insbesondere aber ist eine Kombination des Drucksensorsignalverlaufes und des Motorstromverlaufes vorteilhaft zur Schweißstromsteuerung zu verwenden, da sie eine völlige Unabhängigkeit vom Getriebeverhalten sowie auch vom Zangenverhalten erbringt. Eine zeitliche Folge der beiden genannten Signale läßt sich außerdem vorteilhaft nutzen, den Zustand der Zangenmechanik, insbesondere des Getriebes, zu überwachen.

Die jeweils für eine optimale Schweißung zu wählenden Parameter hängen von den zu verschweißenden Materialien, deren Oberflächeneigenschaften und -beschichtungen, dem Elektrodenzustand und den Geometrien der Objekte und Elektroden ab.

Das Schweißsteuerungsprogramm, das die Strom- und/oder Druck-Meßwertauswertung vornimmt, ist bei geeigneter Korrelierung der verschiedenen Meßwertarten das gleiche.

Bei der Einschaltung des Schweißstromes liegt ein vorgegebener Ausgangsstrom des Motorstromreglers und eine Anfangsdistanz der Schweißelektroden zueinander vor. Mit zunehmender Temperatur am Schweißpunkt vergrößert sich die Distanz, wodurch am Drucksensor ein Druckmeßsignal auftritt oder, soweit dieses Getriebe rückwärts reagiert, Wegsignale vom Wegmeßgeber abgegeben werden, die zu einem Differenzdistanzwert akkumuliert werden und einer Gegenregelung des Motorstromes dienen. Eine Korrelation der Stromdifferenz zu der Wegdifferenz ist über die Stromänderung gegeben, die eine Distanzänderung um entsprechend ein Increment ergibt. Die Drucksignaländerung, die einer Stromsignaländerung entspricht, dient einer Korrelation dieser Signale, so daß sich beide Änderungen summieren lassen. Dieser Summenwert und/oder der Druckmeßwert wird mit einem Schwellwert verglichen und dessen Überschreitung festgestellt und/oder in dessen Verlauf die Überschreitung eines Maximums ermittelt.

Jeweils zu diesem so ermittelten Zeitpunkt werden die Reglervorgaben, d. h. im einfachsten Fall der Schweißstromwert sowie ein Start einer Haltezeit und/oder ein neuer Schwellwert für den Druckmeßwert oder den Summenwert vorgegeben, zu dem bei dessen Unterschreitung der Schweißstrom ganz abgeschaltet und die Schweißzange aufgesteuert wird.

Wird der Zeitpunkt des Überschreitens des Maximums des Druckmeßwertes oder des Summenwertes aus den Meßwerten genutzt, so wird der im Schweißpunkt auftretende Schmelzvorgang bezüglich einer kritischen Größe erfaßt und diese zu einem Abschaltkriterium gemacht. Die Teil- und/oder Vollabschaltung und die Beendigung der Haltezeit, die dem ungestörten Erstarren der Schweißlinse dient, wird bevorzugt mittels einer Zeitablaufsteuerung vorgenommen.

Wird die Abschaltsequenz abhängig von einem Schwellwert gesteuert, so lassen sich trotzdem zeitlich das Überschreiten des Maximums, dessen Höhe und das weitere Abklingen der thermischen Veränderung der Schweißstelle ermitteln und, z. B. tabellarisch oder bildlich, darstellen und Grenzüberwachungen vornehmen, so daß stets eine Güteüberwachung der Schweißung vorgenommen wird und unzulässige Änderungen der Verhältnisse, z. B. durch Materialunterschiede, Änderungen an der Oberfläche oder den Elektroden, erkannt und beseitigt oder durch neue Vorgaben kompensiert werden können.

Damit die Regelung der Motorposition durch den Motorstrom möglichst verzögerungsfrei und präzise erfolgt, kann ein PID-Regler zum Einsatz kommen. Außerdem oder alternativ ist es vorteilhaft, einen Motorstromverlauf während einer Schweißung zu speichern und diesen bei folgenden Schweißungen als eine Komponente des Motorstromsollwertes in den Regler einzuspeisen.

Weiterhin hat es sich als vorteilhaft erwiesen, wenn der Schweißstromgenerator derart angesteuert wird, daß der abgegebene Schweißstrom zeitlich verzögert bis auf einen vorgegebenen Maximalstrom ansteigt.

Zur Reaktion auf Störungen im Verlauf einer Schweißung, die sich in den Meßsignalen bemerkbar macht, und z. B. durch das Aufschmelzen einer Oberflächenbeschichtung oder das seitliche Austreten von geschmolzenem Metall entstehen, ist es vorteilhaft vorgesehen, daß die Eingangssignale und/oder deren Summensignale von der Überwachungsvorrichtung auf eine abrupte Änderung nahe vor oder nach dem Ende der Schweißstromzuführung überwacht werden und bei deren Auftreten eine Störungsmeldung abgesetzt wird und eine stärkere Verzögerung des Schweißstromanatieges und/oder eine stufenweise Verringerung des Maximalstromes für einen folgenden Schweißzyklus vorgegeben wird.

Auf diese Weise können die optimalen Schweißparameter, insbesondere bei unbekannten Materialien, durch eine systematische Versuchsserie quasi automatisch ermittelt werden, indem bei Durchführung einer Parameteradaptionsserie von Schweißungen der Maximalstrom schrittweise pro Schweißung erhöht wird bis nahe vor oder nach dem Ende der Schweißstromzuführung eine abrupte Änderung der Eingangssignale oder deren Summensignale die Überwachungsvorrichtung eine Störung signalisiert, worauf der Maximalstrom für die folgenden Schweißungen herabgesetzt vorgegeben wird.

Eine weitere Verbesserung der Schweißung läßt sich, insbesondere bei dicken und/oder unebenen Blechen, erreichen, indem nach dem Schließen der Schweißzange der Schweißstromgenerator mindestens einen Heizstromimpuls liefert, der gewöhnlich wesentlich kürzer und/oder niedriger als der Schweißstromimpuls ist, wobei eine Verringerung des Druckmeßsignals mittels einer Beobachtung des/der Eingangssignal(e) und/oder deren Summensignal von der Überwachungsvorrichtung kontrolliert wird und, wenn das Druckmeßsignal oder das Summensignal sich zeitlich um weniger als ein vorgegebenes Maß verringert, kein weiterer Heizstromimpuls jedoch der Schweißstrom vom Schweißstromgenerator abgegeben wird.

Weiterhin ergibt sich eine Verbesserung der Schweißung, wenn in der Schweißzeit eine Änderungsgeschwindigkeit des Druckmeßsignales und/oder des Summensignals an der Überwachungsvorrichtung mittelbar oder unmittelbar gemessen wird und abhängig von einer Über- oder Unterschreitung einer vorgegebenen Änderungsgeschwindigkeit die Abschaltung des Schweißstromes bezüglich eines Auftretens eines Maximums des Druckmeßsignals oder des Summensignals an der Überwachungsvorrichtung früher bzw. später erfolgt und so für die nächste Schweißung vorgegeben wird.

Weiterhin hat es sich als günstig für die Ausbildung der Schweißlinse erwiesen, insbesondere auch dann, wenn mehrere Punktschweißungen nahe beieinander vorgenommen werden, die zu Nebenschlußströmen führen, daß nicht, wie gewöhnlich abgeplattete, sondern ballige Schweißelektroden verwandt werden und zur Überprüfung von deren ausreichender Kontaktierung der ein Einsinken in das Schweißobjekt in einem Anfangszeitraum der Schweißzeit ein Absinken des Druckmeßsignals und/oder des Summensignals an der Überwachungsvorrichtung überwacht wird und dessen Größe und zeitliche Lage als Steuerkriterien für den Verlauf des Schweißstromes, insbesondere des folgenden Schweißstromes, dienen.

Durch den im Zentrum des Elektrodeneindrucks vorhandenen äußerst geringen Übergangswiderstand und die dadurch auftretende hohe Stromdichte wird eine punktuelle Initialisierung einer. Schweißlinse erbracht, die deren radiales Wachstum ohne ein seitliches Ausbrechen verbessert und sichert.

Außer einer vorbeschriebenen schrittweisen Optimierung der Schweißparameter läßt sich vorteilhaft auch eine unmittelbare Schweißstrombeeinflussung zur Verbesserung der Schweißung vornehmen, indem auf den Einfluß unterschiedlicher Kontaktwiderstände unmittelbar reagiert wird, indem in der Schweißzeit eine Änderungsgeschwindigkeit des Druckmeßsignals oder des Summensignals der Überwachungsvorrichtung mittelbar oder unmittelbar gemessen wird und abhängig von einer Über- oder Unterschreitung einer vorgegebenen Änderungsgeschwindigkeit eine Steilheit des Schweiß-Stromanstiegs und/oder ein Maximalstrom verringert bzw. erhöht dem Schweißstromgenerator vorgegeben wird.

Im folgenden ist ein Verfahrensablauf aufgelistet:
A - Schweißzange in Position am Werkstück bringen, dann
B - Schweißzangen-Schließsteuerung bis Wegsignal und der Zangenantriebsstrom eine Zeit lang konstant sind, dann
C - Schweißstrom einschalten und Wegsignal sowie Zangenantriebsstrom auf Erreichen des Maximums überwachen. Nach dessen erreichen:
D - Schweißstrom abschalten; Zangenantriebsstrom nach Vorgabe und wegsignalabhängig steuern; Haltezeitablauf überwachen. Nach dem Zeitablauf:
E - Zangenantrieb auf Öffnen der Zange steuern bis vorgegebene Distanz erreicht ist.
   - Weiter wie A-.

Die Ermittlungen des Maximums und der Stromkonstanz oder des Stillstandes werden unter geeigneten Filtermaßnahmen und/oder bei bestimmten Ansprechbandbreiten vorgenommen, da mit Unstetigkeiten im Kraft-, Weg- und Stromverlauf zu rechnen ist, die u. a. aufgrund der Increment-Decrementsignalgabe am Wegmelder sowie durch externe Störungen oder von Regelschwingungen kleinere Amplitude auftreten.

Für den Schließantrieb der Schweißzange sind besonders gut Kugelspindelmotoren geeignet, die ein relativ hohes Kraft-Gewichtsverhältnis haben. Der Motor ist ein bürstenloser Drehstrom- oder Gleichstrommotor. An seiner Welle ist ein sogenannter Resolver, d. h. ein Schrittsignalgeber, der richtungsabhängig Impulse abgibt. Üblich werden 1024 Schritte pro Motorumdrehung geliefert. Bei geeigneter Gewindesteigung läßt sich eine Wegänderung von 1 µm signalisieren.

Eine Regelung auf eine konstante Schweißzangen-Schließstellung, also eine geregelte "Verriegelung" der Zange, geschieht in Millisekunden, sobald ein Wegimpuls festgestellt wurde.
Da der Signalverlauf an dem Schließantrieb bei der Schweißung, solange keine Störungen auftreten, an jeweils den entsprechenden Schweißstellen gleicher Werkstücke zueinander sehr ähnlich ist, wird vorteilhaft eine Speicherung eines optimalen zeitlichen Stromverlaufes vorgenommen und bei einem späteren Schweißvorgang als Referenzstromverlauf genutzt, was die Reglertätigkeit auf den Ausgleich geringer Differenzen zum Referenzverlauf beschränkt und somit die Regelgüte steigert. Der Regler hat somit nicht nur je nach Vorgabe ein übliches PID-Verhalten sondern eine Lernfähigkeit.

Die Signalverarbeitung des Resolversignals mit der davon abhängigen Stellsignalerzeugung geschieht bevorzugt in einem Mikroprozessor, der aus dem summierten Resolversignal das Wegsignal erzeugt und durch geeignete Filterung der differentiellen Wegsignale, d. h. der Resolversignale, und eine laufende Grenzwertüberwachung einen quasi Stillstand oder eine vorgegebene Steigung oder einen vorgegebenen Abfall sowie durch weitere Differentiation und Grenzwertüberwachung das Überschreiten eines Maximums ermittelt werden. Die Filterparameter und die vorzugebenden Grenzwerte, Steigungs- oder Abfallsteilheiten lassen sich durch eine Tastatureingabe bereitstellen und ggfls. variieren, so daß die Vorrichtung leicht an unterschiedlichen Zangengeometrien und -Auslegungen und an Abnutzungserscheinungen angepaßt werden kann.

Um eine sehr schnelle Regelung zu verwirklichen, ist es vorteilhaft, die zeitlichen Abstände der Resolversignale gleicher Richtung zu messen, wobei sich unmittelbar die Änderungsgeschwindigkeit des Weges durch Inversion der Abstandswerte ergibt.

Auch die Druckmeßsignale und die Strommeßsignale lassen sich jeweils von einem Analog-Digitalwandler durch dessen Zählsignale, die der Vergleicher gewöhnlich an den Digitalzähler liefert, repräsentieren, und deren zeitlicher Abstand ist entsprechend invertiert ein Maß für die Steigung bzw. bei Signalen umgekehrter Zählrichtung für das Abfallen des Stromes.

Insbesondere die modernen hochlegierten Stahlbleche neigen zum Spritzen, da deren Material sich schlagartig stark verflüssigt.

Zu der auf die Qualität der Schweißungen gerichteten Forderung kommt das Erfordernis einer lückenlosen Überwachung und Dokumentation aller Schweißpunkte bezüglich ihrer Qualität.

Außerdem ist es wichtig, die Schweißzykluszeit so kurz wie möglich zu halten ohne an Qualität einzubüßen.

Das Vorhandensein aller für eine qualitativ hochwertige Schweißung erforderlichen Bedingungen wird in einer Weiterbildung der Erfindung aus dem thermischen Verformungsverhalten der jeweiligen Schweißstelle abgeleitet, und Abweichungen davon, die festgestellt werden, dienen der Optimierung der Vorgabe unter Berücksichtigung kurzer Schweißperioden. Auf diese Weise werden mehrere Probenschweißungen mit einer gegebenen Blechart und -dicke und einer bestimmten Elektrodenausbildung genutzt, um die Bestromungshöhe, -dauer und deren gesamten zeitlichen Verlauf so festzulegen, daß bei möglichst kurzer Taktzeit noch keine Spritzer entstehen.

Es hat sich gezeigt, daß übliche Bleche einer Dicke von je 0,5 mm bis zu je 3,5 mm ein einheitliches charakteristisches Ausdehnungsverhalten der Schweißstelle zeigen, und daß der Schmelzvorgang und ein beginnender Durchbruch aus dem Verlauf ersichtlich sind. Der Schmelzvorgang erzeugt eine zunehmende Ausdehnung an der Schweißstelle, die um so größer ist, je dicker die Bleche sind. Kommt die flüssige Schweißlinse bis nahe an die Oberfläche der Bleche, so wird diese durch den anhaltenden Druck der Schweißzange leicht eingedrückt; die Ausdehnung überschreitet also ein Maximum. Diesen Effekt ausnutzend wird die Bestromung je nach der Art der Bleche beim Nachlassen der Ausdehnungsänderung etwas vor dem Maximum oder direkt wenn dieses auftritt oder auch etwas verzögert abgeschaltet und ein Halten des Elektrodenandruckes für eine bestimmte Haltezeit eingeleitet, in der die Rekristallisierung der Schweißlinse erfolgt. Das Erreichen des Maximums garantiert die geforderte Tiefenausdehnung der Schweißlinse und somit des Verbindungsbereiches und dessen Verankerung im Gefüge.

Bei aufeinanderfolgenden Schweißungen wird die Schweißstromstärke jeweils schrittweise erhöht, so daß die resultierende Zeit bis zum Auftreten des Maximums entsprechend kürzer ist. Die höchste Stromstärke und die kürzeste Schweißzeit sind jeweils dann über- bzw. unterschritten, wenn in der Nähe des Maximums, i. a. kurz danach, ein steiler Einbruch der Schweißstelle erfolgt, der das Austreten des flüssigen Materials anzeigt. Wird demgemäß der Schweißstrom ca. 5% unter den kritischen Wert, bei dem der Durchbruch auftrat, künftig vorgegeben, so ergeben sich die optimalen Verhältnisse für die entsprechende Blechart und - dicke.

Die standardisierte Beobachtung des Auftretens des Ausdehnungsmaximums und ggf. eines Einbruches erbringen die jeweils optimale Schweißung und eine zuverlässige Qualitätsbeurteilung der Schweißung. Abweichungen von dem Ausdehnungsverlauf und eine merkliche Änderung der Zeitdauer der Bestromung sind Anzeichen für i. a. nachteilige Einflüsse an der Anordnung. Diese können u. a. Änderungen an den Blechen, insbesondere an deren Oberflächen oder deren Beschichtungen, oder den Kontaktflächen der Schweißelektroden sein. Diese sollten konvex ausgebildet sein, so daß der Schweißstrom auf einen definierten engen Bereich, in den die Elektroden in die Blechoberfläche eingedrückt werden, im Zentrum der Linse konzentriert fließt.

Die Elektrodenspitzen dringen durch die hohe Zangenkraft etwas in die Blechoberfläche ein und kühlen diese einschließlich der galvanischen Schutzschicht so weit ab, daß ein Teil der Schutzschicht erhalten bleibt und auch kein Oberflächenmaterial herausspritzt, das zu Verschmutzungen führen würde.

Der hohe Druck der Elektroden preßt die Bleche in einem so kleinen Bereich zusammen, daß während der Schweißzeit zentral eine hohe Stromdichte und damit eine zunehmend wachsende Schweißlinse auftritt.

Das Einsinken der Elektroden beim Zusammenpressen wird vorteilhaft an einem kurzzeitigen Absinken des Druckmeßsignals in der Überwachungsvorrichtung als ein Minimum erkannt, dessen Größe und zeitliche Lage als Steuerkriterien genutzt werden.

Bei größeren Blechdicken wird häufig eine so große Unebenheit beobachtet, daß der übliche Anpreßdruck keinen zentralen kleinflächigen Kontakt erbringt. Dies kann zu einer erheblichen Verlängerung der Schweißzeit führen; das zu beobachtende Maximum der Ausdehnung tritt später als erwartet auf. Diese Information wird vorteilhaft genutzt, indem dem eigentlichen Schweißvorgang ein Aufheiz- und Glättungsvorgang vorgeordnet wird, in dem mit wesentlich geringerer Stromstärke, z. B. der halben, als beim optimalen Schweißen anschließend benötigt wird, und mit wesentlich kürzeren Bestromungszeiten im Vergleich zur Schweißzeit, Erwärmungsimpulse in den Blechen erzeugt werden, die dazu führen, daß sich das Blech entspannt und sich dadurch im Bereich der Elektroden zusammensetzt. Diese Setzbewegung wird ebenfalls durch die Beobachtung und Überwachung des Druckmeßsignales auf Konstanz ermittelt. Wenn praktisch keine Setzbewegung, also kein Druckabfall infolge eines Heizstromimpulses mehr auftritt, wird mit der Schweißung mit der vollen vorgegebenen Stromstärke begonnen.

Es hat sich gezeigt, daß es zweckmäßig ist, wenn die vermehrt zum Einsatz kommenden hochlegierten Stahlbleche, die verstärkt zum seitlichen Durchbrechen der flüssigen Schweißlinse neigen, anstatt mit einem Rechteck-Schweißstromimpuls mit einem gesteuerten Stromanstieg, also einem Trapez-Schweißstromimpuls oder einem entsprechenden Stufenanstieg, beaufschlagt werden. Auch die günstigste Steilheit des Schweißstromanstieges läßt sich durch Probeschweißungen ermitteln, bei denen das Auftreten des unerlaubten schnellen Einbruchs der aufgeschmolzenen Schweißstelle als Kriterium für'eine schrittweise Verringerung des Stromanstieges genutzt wird, bis Durchbrüche mit Sicherheit auszuschließen sind.

Treten im laufenden Betrieb zu lange Setzzeiten oder unerwartete Durchbrüche auf, so wird dem durch eine weitere Änderung der genannten Parameter sofort entgegengewirkt. Darüber hinaus werden die Störungen dokumentiert und angezeigt, so daß eine Ursachenforschung und -beseitigung vorgenommen werden kann. Außerdem erfolgt eine Abspeicherung aller Punktschweißungen zwecks Dokumentation des Qualitätsstandes.

Es ist bekannt, die Anpreßkraft der Elektroden geeignet zu den Blechdicken und der Elektrodenausbildung zu wählen. Wenn Störungen im Antriebssystem auftreten, so daß die durch die Motorbestromung vorgegebene Andruckkraft an den Elektroden nicht voll wirksam wird, so wirkt sich auch das merklich am Drehsignalgeber aus, weil das Setzen verzögert stattfindet und das Eindrücken nach dem Überschreiten des Maximums der Schweißstellenausdehnung verringert ist. Letzteres tritt auch in Verbindung mit einer größeren Schweißenergieaufnahme bei einer zunehmenden Elektrodenabplattung auf.

Die Vorrichtung hat sich insbesondere auch für das Schweißen von sehr dünnen Blechen und bei der Verwendung von relativ elastischen Schweißarmen bewährt.

Vorteilhafte Ausgestaltungen sind schematisch in Fig. 1 - 3 dargestellt:
- Fig. 1: zeigt ein Funktionsschema der Vorrichtung;
- Fig. 2: zeigt beispielhafte zeitliche Signalverläufe;
- Fig. 3: zeigt eine Widerstandsschweißzone vergrößert im Schnitt.

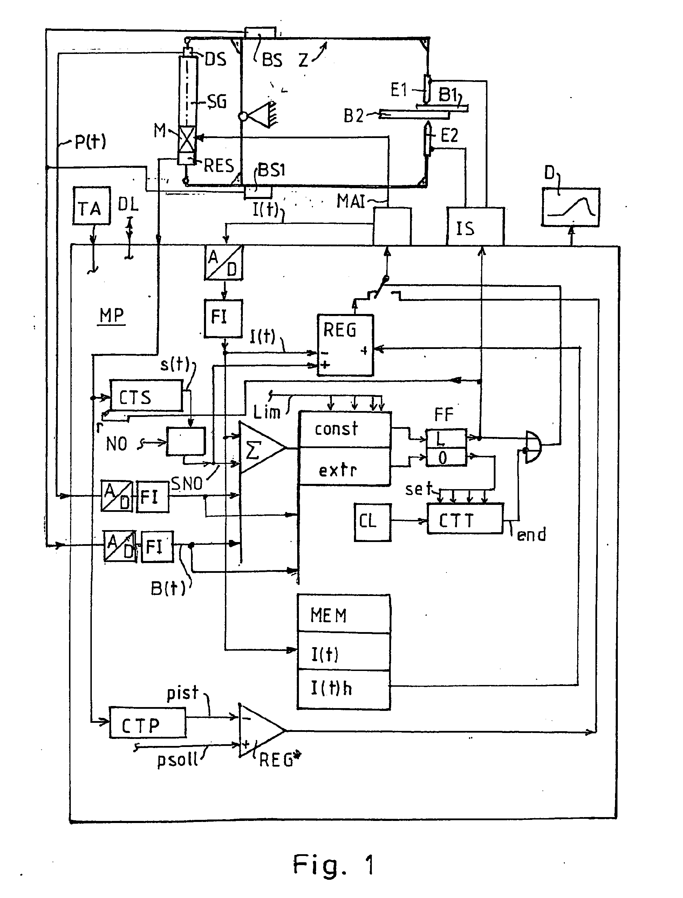

Fig. 1 zeigt beispielhaft eine Schweißzange (Z) des Bautyps X mit den beiden Schweißelektroden (E1, E2) zwischen denen das Schweißobjekt, die beiden Bleche (B1, B2), zusammengepreßt gehalten sind. Den Anpreßdruck erzeugt der Lineartrieb (LM), der bevorzugt aus einer Kugelumlaufspindel (SG) mit einem Antriebsmotor (M) besteht, der mit einem Motoransteuerstrom (MAI) beaufschlagt wird und dessen Drehbewegungen jeweils von einem Resolver (RES) durch winkelgemäße Vor- und Rückwärtsimpulse bzw. phasenversetzte Impulszüge signalisiert werden, aus denen Richtungsimpulse ableitbar sind. Ggf. ist abtriebsseitig an dem Spindelgetriebe (SG) ein Drucksensor (DS) nachgeordnet, dessen Drucksignal (P(t)) der Auswertvorrichtung (const, extr) zugeführt ist. Entsprechend läßt sich das Schema auf einen C-Zangentyp abwandeln. Weiterhin ist ggf. ein Biegesensor (BS, BS1) an/in mindestens einem der Schweißzangenarme angebracht. Die Biegesignale werden digital-analog gewandelt, gefiltert und normiert der Überwachungsvorrichtung (MP) zugeführt.

Die Schweißelektroden (E1, E2) sind mit einem Schweißstromgenerator (IS) verbunden, der beispielsweise ein-aussteuerbar ist, aber auch in Stromstufen oder nach einer laufenden Steuervorgabe, z. B. linear variierend, gesteuert sein kann, falls besondere Verhältnisse am Schweißobjekt dies erfordern.

Die Ansteuerung des Motors (M) und des Schweißstromgenerators (IS) geschieht über eine Steuervorrichtung, die im wesentlichen aus einem Mikroprozessor (MP) besteht. Dieser erhält Einstellparameter und Grenzwerte (Lim) über eine Tastatur (TA) oder ein ähnliches Dateneingangsmedium und liefert Prozeßdaten, Zustands- und Alarmmeldungen etc. an ein Bildschirmgerät (D) in bekannter Weise in nummerischer oder bildlicher Form, z. B. als Weg-, Druck-, Biegemoment- und/oder Stromkurve. Über eine Datenleitung (DL) ist der Prozessor (MP) bevorzugt mit einem Zentralprozessor verbunden, wenn diese Schweißstation Teil einer Fertigungsstraße ist.

Die Resolversignale (RES) werden zum einen in einem Positionszähler (CTP) summiert, dessen Positionsangabe zum Schließen und Öffnen als Istposition (pist) einem Regler (REG*) zugeführt wird, dem als Soll-Position (psoll) eine externe Vorgabe geliefert wird, soweit nicht andere Steuerkriterien Vorrang haben.

Die Resolversignale (RES) werden außerdem differentiell, z. B. durch Messung des Abstands gleichsinniger Impulse, auf einen quasi Stillstand (const) hin und auf das Überschreiten eines Maximums (extr), das sich aus einer Richtungsumkehr der Drehgeberimpulse ergibt, überprüft. Diese Überprüfungen (const, extr) gehen mit einer Filterung, Mittelung od. dgl. einher, damit nur wirklich relevante Zustände zur weiteren Steuerung genutzt werden. Die Einstellparameter (Lim) werden dazu extern vorgegeben.

Ist bei einer Schließbestromung des Motors (M) der Konstantzustand (const) des Summensignals ermittelt, wird dieser in einem Zustandsspeicher (FF), der als Flip-Flop symbolisiert ist, gespeichert, der den Schweißstromgenerator (IS) einschaltet. Gleichzeitig wird ein Wegzähler (CTS) zurückgesetzt, der die Resolversignale (RES) auszählt, so daß der Zählerinhalt (s(t)) laufend die Distanzänderung, den Weg am antriebseitigen Getriebeende, nach dem Einschalten des Schweißstromes (IS) signalisiert. Außerdem werden das Strommeßsignal (I(t)) des Antriebsmotors (M) und ggf. das Druckmeßsignal (P(t)) und/oder das Biegemomentmeßsignal (B(t)) jeweils gefiltert und normiert mit dem Wegsignal summiert der Überwachungsvorrichtung (const, extr) zugeführt. Dieses Summensignal (Σ) oder das Drucksignal (P(t)) wird z. B. auf dem Display (D) dargestellt. Sobald der Zustand des Maximumdurchlaufes (extr) des Summensignals (Σ) oder Druckgebersignals (P(t)) oder Biegemomentsignals (B(t)) erkannt ist, wird der Konstantzustandsmerker (FF) gelöscht, wodurch der Schweißstromgenerator (IS) abgeschaltet wird und ein Zeitglied (CTT) auf eine Vorgabehaltezeit gesetzt (set) wird, mit dessen Ende (end) die Öffnensteuerung des Zangenantriebs freigegeben wird. Das Zeitglied (CTT) kann ein voreinstellbarer Zähler sein, der mit den Signalen einer Uhr (CL) zählend beaufschlagt wird.

In einer bevorzugten Ausführung wird der Motorstrom (MAI) abhängig von der Differenz der Positionsangabe (psoll, pist) geregelt, nachdem der Konstantzustand (const) gemeldet wurde: Auf diese Weise wird das Getriebe (SG) antriebsseitig aktiv blockiert. Es entsteht demgemäß ein Druck zwischen den Elektroden und am Drucksensor (DS), der dem Ausdehnungs- und späteren Schrumpfzustand beim Schweißen folgt. Somit ist in dieser Betriebsart als neues der Drucksensor (DS) sowie die Verwendung von dessen Druckmeßsignal (P(t)) in eine elektrische Punktschweiß-Steuerung zusätzlich eingebracht. Das Motorstrommeßsignal (I(t)) wird dem Prozessor (MP) zugeführt, analog - digital (A/D) gewandelt und in einem Filter (FI) gefiltert. Mit dieser Ausstattung kann bei geeignet großer Antriebskraft in der Schweißzeit und in der Haltezeit danach jeweils als Regelkriterium der Inhalt des Wegzählers (CTS) dienen, wobei der Sollweg zu Null gesetzt ist. Dies führt dazu, daß bei steigender Expansionskraft der Schweißstellen ein dieser entgegenwirkender steigender Motorstrom durch den Regler geliefert wird. Das gewandelte und gefilterte Stromverlaufsignal (I(t)) sowie das gewandelte, gefilterte und normierte Druckmeßsignal (P(t)) werden summiert oder getrennt dem Maximumdetektor (extr) zugeführt. In der Darstellung ist auch der zeitliche Wegsignalverlauf (s(t)) nach passender Normierung (NO) in das Summensignal summiert und so dem Maximumdetektor (extr) und dem Konstanzdetektor (const) der Überwachungsvorrichtung zugeführt. Alle drei Signalverläufe werden also zugleich oder einzeln berücksichtigt. Dadurch werden Widerstände im Spindelgetriebe (SG) und Trägheiten in diesem und in dem Positionsregler in ihrer Wirkung ausgeschaltet.

Eine Verbesserung des Regelverhaltens der Positionsregelung des Motors ergibt sich bei einem bekannten Verhalten der Schweißstellen und einem dazu vorgegebenen Schweißstromverlauf. Dazu wird in den Stromregler als ein bekannter Reglerstromverlauf eine Sollwertkomponente eingespeist, die zu der Weg-zu-Null Komponente hinzutritt. Ein geeigneter Vorgabe-Stromverlauf (I(t)h) wird vorteilhaft aus der Speicherung von historischen Stromverläufen (I(t)), also bei vorherigen Schweißvorgängen, in einem Speicher (MEM) abgeleitet. Wird dieser Vorgang der Speicherung und späteren Vorgabe des Stromverlaufes oft wiederholt, erfolgt eine sehr schnelle Regelung mit abnehmenden Abweichungen von der Zielvorgabe, nämlich einer starr verriegelten Schweißzange.

Die Ausgestaltung der einzelnen durch Hardwaresymbolik veranschaulichten Funktionskomponenten ist vorzugsweise in Form eines Steuerprogrammes mit Unterprogrammkomponenten vorgenommen. Auf diese Weise sind Parameter leicht zu ändern und die Auswirkung solcher Änderungen im Steuerungsablauf und in der Reaktion der Zangenmechanik und des Objektes zu überprüfen, indem Größen überwacht und ausgegeben werden. Die Zählvorgänge können in bekannter Weise mit einer Interruptsteuerung durchgeführt werden, der z. B. die Resolversignale (RES) oder vom Analog/Digitalwandler die Increment/Decrementsignale zugeführt werden.

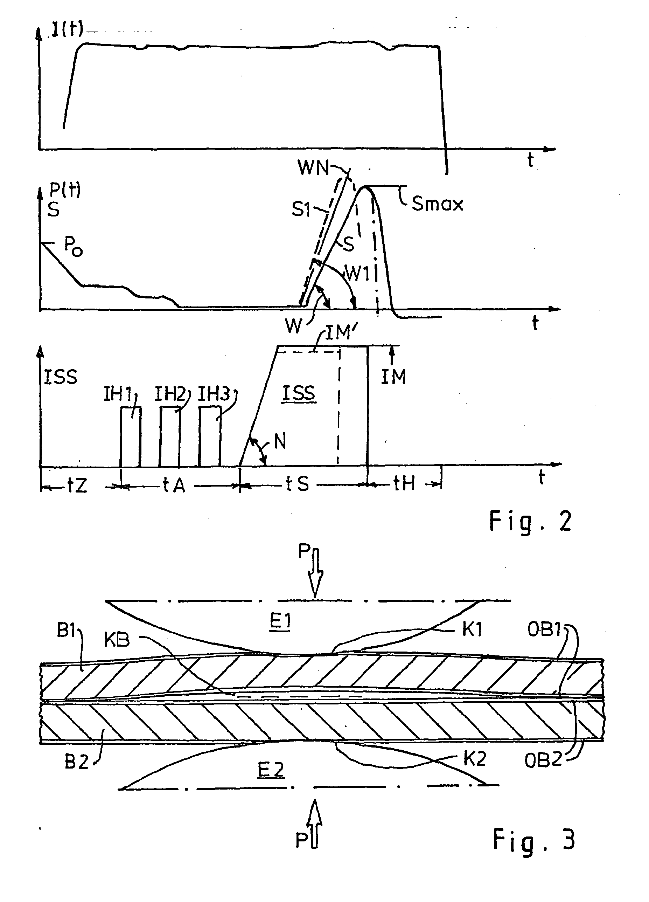

Fig. 2 zeigt die zeitlichen Verläufe der Wirk- und Reaktionsgrößen einer Widerstandsschweißung, wobei die Sonderfälle berücksichtigt sind, daß dicke Bleche vor dem Schweißen entspannt und gesetzt werden und aufgrund einer kritischen Legierung des Materials und/oder einer empfindlichen Beschichtung ein langsamer Schweißstromanstieg vorgenommen wird.

Der Zangenstrom (ISS) wird vorab in z. B. drei Aufheizimpulse (IH1 - IH3) zeitlich beabstandet appliziert, und danach wird der höhere, z. B. doppelt so hohe, Schweißstromimpuls (IS) für eine längere Zeit eingespeist, wobei gegen Abschluß des Schweißprozesses auch eine Stromabsenkung vorgenommen werden kann.

Während des gesamten Schweißprozesses, der im wesentlichen aus einer Zangenschließzeit (tZ), der aus mehreren Phasen bestehenden Aufheiz- und Setzzeit (tA), der eigentlichen Schweißzeit (tS) und der Haltezeit (tH) besteht, wird die Zangenkraft (P) durch den vorgegebenen Motorstrom im wesentlichen konstant gehalten.

Die Reaktion des Elektrodenabstandes (S), der durch die gemessene Zangenkraft (P(t)) repräsentiert wird, wenn das Getriebe mit einer Stromregelung oder mechanisch blockiert wird, zeigt der zweite, und die Ströme (ISS), die die Schweißstelle beeinflussen, zeigt der dritte dargestellte Kurvenverlauf. Der Druckverlauf (P(t)) ist relativ bezüglich eines anfänglichen Schließdruckes (Po) dargestellt. Das Verhältnis von Elektrodenabstand (S) zum Druck (P(t)) ist im wesentlichen durch die Federkonstante der Schweißarme bestimmt.

In der Schließzeit (tZ) werden die Bleche zwischen den Elektroden zusammengepreßt, bis der Elektrodenabstand (S) konstant bleibt bzw. der Winkelgeber (RES) zur Ruhe kommt und die Motorkraft voll in die Anpreßkraft (P(t)) umgesetzt wird.

In der Aufheizzeit (tA) werden nacheinander drei Aufheizstromimpulse (IH1 - IH3) mittlerer Größe appliziert. Durch das Aufheizen entspannen sich die Bleche nach und nach, wodurch ein Setzen der Elektroden mit den Blechen in entsprechenden Stufen eintritt, wie der gestufte Verlauf des Elektrodenabstandes (S) bzw. des Druckmeßsignales zeigt. Bereits die ersten beiden Aufheizstromimpulse (IH1, IH2) reichen für ein vollständiges Setzen aus; der dritte Reserveheizimpuls bringt kein weiteres Setzen.

In der Schweißzeit (tS) steigt der Schweißstrom gemäß der jeweiligen Vorgabe mit einer Neigung (N) auf seinen jeweils vorgegebenen Maximalwert (IM) an. Der sachte Stromanstieg dient zum sachten Einsetzen der Elektroden in eine Oberflächenbeschichtung, z. B. Zink, mit niedrigem Schmelzpunkt und zur Verhinderung eines Ausbrechens der Schmelze aus der Linse, insbesondere bei einem hochlegierten Blechmaterial. Während der Schweißbestromung vergrößert sich die Schweißstelle durch thermische Ausdehnung der Bleche und der darin eingeschlossenen entstehenden Schmelze, was den Elektrodenabstand (S) und den Druckmeßwert (P(t)) nach und nach vergrößert bis sich die Abstands- bzw. Druckzunahme verlangsamt und ein Maximum (Smax) erreicht ist.

Im Beispiel wird bereits bei nachlassender Ausdehnungsgeschwindigkeit vor Erreichen von deren Maximum der Schweißstrom (IS) abgeschaltet, und durch die anhaltende Andruckkraft (P(t)) während der vorgegebenen Haltezeit (tH) sinkt die Schweißstelle wieder ein, und der Elektrodenabstand (S) stabilisiert sich auf einem Endniveau das etwas unter dem Ausgangsniveau liegt. Das Endniveau entspricht i. a. etwa der halben Einsinktiefe.

Strichpunktiert ist ein steiler Abstandsabfall dargestellt, der immer dann auftritt, wenn Schmelze austritt und herausspritzt. Durch den Materialverlust sinkt dann die Elektrode aufgrund der anhaltenden Andruckkraft schnell tief in die Schweißstelle ein. Tritt ein solcher abrupter Abfall des Elektrodenabstandes (S) bzw. Druckes auf, werden die Schweißparameter der nächsten Schweißung vorbeugend geändert, z. B. die Neigung (N) des Stromanstieges verringert und/oder der maximale Schweißstrom (IM) verringert.
Am Ende der Haltezeit (tH) wird die Schweißzange geöffnet und an einen anderen Schweißpunkt verbracht.

Weiterhin zeigt Fig. 2 gestrichelt einen zeitlichen Verlauf der Dehnung (S1) von hochfestem Stahl, der im Vergleich zu der Elektrodenabstandsänderung (S) von gewöhnlichem Stahl bei ansonsten gleichen Verhältnissen sich wesentlich schneller ausdehnt. Die Abschaltung des Schweißstromes erfolgt demgemäß wesentlich früher. Diesen Effekt nutzend wird jeweils die zeitliche Veränderung der Spaltweite, die als Winkel (W, W1) dargestellt ist, zu Beginn der gemessenen Ausdehnung der Schweißstelle bzw. des Druckanstieges ermittelt und daraus sofort festgelegt, wann die Stromabschaltung in Bezug auf das auftretende Maximum der Dehnung erfolgen soll oder wie steil der Schweißstromanstieg künftig vorgegeben wird.

Diese Methode enthebt bei der automatischen Ermittlung der optimalen Parameter es bei einer Vorabserie von Schweißungen erst zu Ausbrüchen der Schmelze kommen zu lassen.

Je steiler der Anstieg des Elektrodenabstandes (S, S1) bzw. Druckes (P(t)) ist, um so eher erfolgt die Stromabschaltung in Bezug auf das Maximum der Ausdehnung (S, S1) bzw. des Druckmeßwertes (P(t)).

Vorteilhaft wird in einer weiteren Ausführung die Geschwindigkeit der Schweißstellenausdehnung, die durch die Steigungswinkel (W, W1) in der Figur repräsentiert ist, gemessen und als Regelkriterium für die Wahl der Stromanstiegsgeschwindigkeit (N) und insbesondere für die Maximalstromstärke (IM) unmittelbar genutzt. Ist der Anstiegswinkel (W1) größer als ein Normalwinkel (WN), wie im Beispiel, so wird der Maximalstrom (IM) verringert und umgekehrt wird bei zu langsamer Ausdehnung der Schweißstelle der Stromanstieg (N) und/oder der Maximalstrom (IM) erhöht.

Somit findet eine unmittelbare Bestromungsregelung statt. Durch diese werden nicht nur Unterschiede in der Materialart sondern auch andere Änderungen am Schweißobjekt oder der Schweißvorrichtung, z. B. Änderungen wie eine zunehmende Abplattung, an den Schweißelektroden ausgeglichen, indem der Maximalstrom zunimmt und die Schweißzeit nicht unerwünscht verlängert wird. Diese Art der Schweißstromregelung bietet also einen großen Vorteil.

Fig. 3 zeigt einen vergrößerten Axialschnitt durch eine Schweißstelle am Ende der Schließzeit der Elektroden (E1, E2). Es sind relativ dicke Bleche (B1, B2) dargestellt, deren Kontaktbereich (KB) noch nicht geschlossen ist, da die Bleche (B1, B2) dort leicht gebeult sind, wie überhöht dargestellt ist.

Die Elektrodenspitzen (E1, E2) sind etwa kugelförmig gerundet und in einem relativ kleinen Kontaktbereich (K1, K2) in die Bleche (B1, B2) eingedrungen. Die Kontaktbereiche (K1, K2) sind insbesondere in die Oberflächenbeschichtungen (OB1, OB2) eingedrückt, so daß dort jeweils ein relativ geringer Übergangswiderstand entsteht und somit wenig Wärmeenergie entsteht und infolge der guten Wärmeleitung der gekühlten Elektroden praktisch kein Material aufschmilzt und herausspritzt oder die Elektroden verstärkt auflegiert, was zu deren Erweichung und baldigen Verformung führen würde, so daß danach eine Verschlechterung der Übergangs- und Zusammenpressverhältnisse die Folge wäre bzw. eine Nacharbeit der Elektroden erfolgen müßte.

## Patentansprüche

1. Steuervorrichtung zum Punktschweißen mit einer Schweißzange (Z), deren Schweißelektroden (E1, E2) an Zangenarmen gehalten und mit einem Schweißstromgenerator (IS) verbunden sind, und die durch einen elektromotorischen Antrieb (M), an dem ein Resolver (RES) angeordnet ist, mit dessen Signalen von einer Steuervorrichtung (MP) die Schweißzange (Z) Vorgaben (psoll) gemäß auf und zu zu steuern ist, und wobei im geschlossenen Zustand der Schweißzange (Z) diese zwischen den Schweißelektroden (E1, E2) Schweißobjekte (B1, B2) durch einen vorgegebenen Motorstrom (MAI) zusammengepresst hält, wobei der Schweißstromgenerator (IS) von der Steuervorrichtung (MP) zeitweilig aktiviert ist, und die Steuervorrichtung (MP) Überwachungsvorrichtungen (const, max) umfasst, denen die Resolversignale (RES) und/oder ein Motorstrom-Messsignal (I(t)) laufend zugeführt werden und dass an dem Spindelgetriebe (SG) abtriebsseitig ein Drucksensor (DS) angeordnet ist, dessen Drucksignal (P(t)) analog-digital gewandelt, gefiltert und normiert auch der Überwachungsvorrichtung (const, max) zugeführt wird, die die zugeführten Signale bezüglich ihres zeitlichen Verlaufs analysiert und zur Steuerung des Schweißstromgenerators (IS) nutzt, sobald diese Überwachungsvorrichtung (const) nach einer ZU-Steuerung der Schweißzange (Z) eine Quasikonstanz erkennt, sie einen entsprechenden erster Zustand als den geschlossenen Zustand speichert und den Schweißstromgenerator (IS) aktiviert, sobald danach die Überwachungsvorrichtung (max) das Überschreiten eines Maximums signalisiert, einen anschließenden weiteren geschlossenen Zustand speichert, indem sie den Schweißstromgenerator (IS) deaktiviert und einen Haltezeitgeber (CTT) aktiviert, bei dessen Ablauf (end) der weitere geschlossene Zustand beendet ist und die Auf- und Zu-Steuerung wieder freigegeben ist, **dadurch gekennzeichnet, dass** die Schweißelektroden (E1, E2) jeweils von einem Zangenarm gehalten sind, an mindestens einem davon ein Biegesensor (BS, Bis 1) angeordnet ist, dessen Biegemesssignal (B(t)) digital-analog gewandelt, gefiltert und normiert auch der Überwachungsvorrichtung (const, max) zugeführt wird, und ein Summensignal aus dem normierten Druckmesssignal (P(t)), dem Resolversignal (RES), dem normierten Strommesssignal (I(t)) und dem normierten Biegemesssignal (B(t)) in der Überwachungsvorrichtung (const, extr) gebildet wird.

2. Steuervorrichtung nach Anspruch 1, **dadurch gekennzeichnet, dass** bei Durchführung einer Parameteradaptionsserie von Schweißungen der Maximalstrom (IM) schrittweise pro Schweißung erhöht wird bis nahe vor oder nach dem Ende der Schweißstromzuführung eine abrupte Änderung der Eingangssignale (RES, I(t), P(t), B(t)), oder deren Summensignale die Überwachungsvorrichtung (const, extr) eine Störung signalisiert, worauf der Maximalstrom (IM) für die folgenden Schweißungen herabgesetzt vorgegeben wird.

3. Steuervorrichtung nach einem der vorstehenden Ansprüche, **dadurch gekennzeichnet, dass** nach dem Schließen der Schweißzange (Z) der Schweißstromgenerator (IS) mindestens einen Heizstromimpuls (IH1 - IH3) liefert, wobei eine Verringerung des Summensignals von der Überwachungsvorrichtung (const, extr) kontrolliert wird und, wenn das Summensignal sich zeitlich um weniger als ein vorgegebenes Maß verringert, kein weiterer Heizstromimpuls (IH2, IH3) jedoch der Schweißstrom (ISS) vom Schweißstromgenerator (IS) abgegeben wird.

4. Steuervorrichtung nach einem der vorstehenden Ansprüche, **dadurch gekennzeichnet, dass** in der Schweißzeit (tS) eine Änderungsgeschwindigkeit (W, W1) des Summensignals an der Überwachungsvorrichtung (const, extr) mittelbar oder unmittelbar gemessen wird und abhängig von einer Über- oder Unterschreitung einer vorgegebenen Änderungsgeschwindigkeit (WN) die Abschaltung des Schweißstromes (ISS) bezüglich eines Auftretens eines Maximums (Smax) des Summensignals an der Überwachungsvorrichtung (const, extr) früher bzw. später erfolgt und so für die nächste Schweißung vorgegeben wird.

5. Steuervorrichtung nach einem der vorstehenden Ansprüche, **dadurch gekennzeichnet, dass** bei einer Verwendung balliger Schweißelektroden (E1, E2) in einem Anfangszeitraum der Schweißzeit (tS) ein Absinken des Summensignals an der Überwachungsvorrichtung (const, extr) überwacht wird und dessen Größe und zeitliche Lage als Steuerkriterien für den Verlauf des Schweißstromes (ISS) dient.

6. Steuervorrichtung nach einem der vorstehenden Ansprüche, **dadurch gekennzeichnet, dass** der zeitliche Verlauf der Korrelation des Druckmesssignals (P(t)) und/oder des Biegemesssignals (B(t)) zu dem Motorstromverlauf (I (t)) ermittelt wird und dieser Verlauf der Korrelation in Beziehung zu einem vorgespeicherten derartigen Verlauf gesetzt wird und bei Abweichungen zwischen diesen, die ein vorgegebenes Maß überschreiten, eine Störungsmeldung ausgegeben wird.

7. Steuervorrichtung nach einem der vorstehenden Ansprüche, **dadurch gekennzeichnet, dass** in der Schweißzeit (tS) eine Änderungsgeschwindigkeit (W,W1) des Summensignals der Überwachungsvorrichtung (const, extr) mittelbar oder unmittelbar gemessen wird und abhängig von einer Über- oder Unterschreitung einer vorgegebenen Änderungsgeschwindigkeit (WN) eine Steilheit (N) des Schweißstromanstiegs und/oder ein Maximalstrom (IM) verringert bzw. erhöht dem Schweißstromgenerator (IS) vorgegeben wird.

8. Steuervorrichtung nach einem der vorstehenden Ansprüche, **dadurch gekennzeichnet, dass** bei einem rückwärts selbsthemmenden Elektromotorantriebssystem die Änderungsgeschwindigkeit (W, W1) des Druckmesssignals (P(t)) und/oder des Biegemesssignals (B(t)) mittelbar oder unmittelbar gemessen wird und abhängig von einer Über- oder Unterschreitung einer vorgegebenen Änderungsgeschwindigkeit (WN) eine Steilheit (N) des Schweißstromanstieges und/oder ein Maximalstrom (IM) verringert bzw. erhöht wird und die Abschaltung des Schweißstromes (ISS) bezüglich eines Auftretens eines Maximums (Smax) an der Überwachungsvorrichtung früher bzw. später erfolgt und so für die nächste Schweißung vorgegeben wird.

9. Steuervorrichtung nach einem der vorstehenden Ansprüche, **dadurch gekennzeichnet, dass** im ersten und/oder im weiteren geschlossenen Zustand der Motorstrom (MAI) derart geregelt wird, dass eine Schweißelektrodendistanz (CTS), die durch eine Summierung der Resolversignale (RES) laufend ermittelt wird, nahezu konstant oder einem vorgegebenen zeitlichen Verlauf gemäß gehalten ist.

10. Steuervorrichtung nach Anspruch 9, **dadurch gekennzeichnet, dass** ein zeitlicher Verlauf des Motorstrommesssignals (I(t)) in einem Speicher (MEM) abgespeichert wird und für spätere Schweißvorgänge jeweils als eine Motorstromsollwertkomponente (I (t) h) bereitgestellt ist und der damit ergänzend gebildete Soll-Stromwert über einen Motorstromregler den Motorstrom (MAI) bestimmt.

11. Steuervorrichtung nach Anspruch 1, **dadurch gekennzeichnet, dass** die Steuervorrichtung (MP) ein Mikroprozessor ist, in dem die Überwachungsvorrichtung (const, max), ein Haltezeitgeber (CTT), eine Zustandsspeicherung (FF) und eine Zustandsumsetzung in die Steuersignale für den Schweißstromgenerator (IS) und den Motorstrom (MAI) programmgesteuert realisiert sind und dem jeweils Parameter Normierungsgrößen (NO) und Grenzwerte (Lim) und Positionsvorgaben (psoll) durch Eingabemittel, eine Tastatur (TA) und/oder eine Datenleitung (DL) zugeführt werden/sind.

12. Steuervorrichtung nach Anspruch 11, **dadurch gekennzeichnet, dass** der Mikroprozessor (MP) ausgangsseitig mit einer Anzeigevorrichtung einem Display (D) verbunden ist, auf dem ein zeitlicher Stromverlauf (I(t)) und ein zeitlicher Verlauf einer Schweißelektrodendistanz (CTS), die durch eine Summierung der Resolversignale (RES) und das Summensignal in den geschlossenen Zuständen laufend ermittelt wird, sowie Überschreitungen von vorgegebenen Grenzwerten (Lim) numerisch und/oder bildlich dargestellt werden.

13. Steuervorrichtung nach einem der vorstehenden Ansprüche, **dadurch gekennzeichnet, dass** der Schweißstromgenerator (IS) derart angesteuert wird, dass ein davon abgegebener Schweißstrom (ISS) zeitlich verzögert bis auf einen vorgegebenen Maximalstrom (IM) ansteigt.

14. Steuervorrichtung nach einem der vorstehenden Ansprüche, **dadurch gekennzeichnet, dass** das Summensignal von der Überwachungsvorrichtung (const, extr) auf eine abrupte Änderung nahe vor oder nach dem Ende der Schweißstromzuführung überwacht wird und bei deren Auftreten eine Störungsmeldung abgesetzt wird und eine stärkere Verzögerung des Schweißstromanstieges und/oder eine stufenweise Verringerung des Maximalstromes (IM) für einen folgenden Schweißzyklus vorgegeben wird.

## Claims

1. Device for resistance spot welding control with an electrode holder (Z), the welding electrodes (E1, E2) of which are held on holder arms and are connected to a welding current generator (IS), wherein said holder (Z) is opened and closed by an electric motor drive (M) comprising a resolver (RES), the signal of which is used by a control device (MP) to control the welding electrode holder (Z) in accordance with instructions (psoll), and wherein, in the closed state, the electrode holder (Z) holds objects for welding (B1, B2) together between the welding electrodes (E1, E2), by means of a pre-set motor current (MAI), wherein the welding current generator (IS) is temporarily activated by the control device (MP), and wherein the control device (MP) comprises monitoring devices (const, max), to which the resolver signals (RES) and/or a motor current measured signal (I(t)) are constantly supplied, and wherein a spindle mechanism (SG) comprises, in output, a pressure sensor (DS) the pressure measured signal (P(t)) of which is converted from analog to digital, filtered and standardized and then also transmitted to a monitoring device (const, max), which analyzes the time curve thereof for controlling the welding current generator (IS), and
once a quasi-constant state is recognised by this monitoring device (const), following a close signal for the welding electrode holder (Z), a corresponding first state is recorded as the closed state and the welding current generator (IS) activated, and thereafter, as soon as the exceeding of a maximum value is reported by the monitoring device (max), a further closed state is recorded, in which the welding current generator (IS) is deactivated and a holding timer unit (CTT) activated, after the expiration (end) of which the on- and off-control of the welding electrode holders is activated again, **characterized in that** the welding electrodes (E1, E2) are each held on a holder arm, that at least one of said arms has a bending sensor (BS1), the bending measured signal (B(t)) of which is converted from analog to digital, filtered and standardized and then also transmitted to a monitoring device (const, max), and a sum signal from the standardized pressure measured signal (P(t)), the resolver signal (RES), the standardized current measured signal (I(t)), and the standardized bending measured signal (B(t)) is formed in the monitoring device (const, extr).

2. Control device according to claim 1, **characterized in that** when a parameter adjustment series of welding processes is performed, the maximum electric current (IM) is increased in steps with each welding process until an abrupt change in the input signals (RES, I(t), P(t), B(t)) or in their sum signals causes the monitoring device (const, extr) to signal a disruption, whereupon the maximum electric current (IM) is pre-set lower for the subsequent welding processes.

3. Control device according to any of the above claims, **characterized in that** after the electrode holder (Z) is closed, the welding current generator (IS) supplies at least one heating current pulse (IH1-IH3), wherein a reduction in the sum signal is monitored by the monitoring device (const, extr), and when the sum signal is reduced by less than a predefined amount, no further heating current pulse (IH2, IH3), but the welding current (ISS) is generated by the welding current generator (IS).

4. Control device according to any of the above claims, **characterized in that** a displacement speed (W, W1) of the sum signal to is measured directly or indirectly at the monitoring device (const, extr) during the welding time (tS), and depending on whether a pre-set displacement speed (WN) is exceeded or undercut, the welding current (ISS) is switched off earlier or later relative to the occurrence of a maximum (Smax) of the sum signal at the monitoring device (const, extr), and is pre-set accordingly for the next welding process.

5. Control device according to any of the above claims, **characterized in that**, when spherical welding electrodes (E1, E2) are used, a reduction in the sum signal is monitored at the monitoring device (const, extr) in an initial period of a welding time (ts), and the amount and timing of said reduction are used as control criteria for the curve of the welding current (ISS).

6. Control device according to any of the above claims, **characterized in that** the variation over time of the correlation between the pressure measured signal (P(t)) and/or the bending measured signal (B(t)) on one hand and the motor current variation over time (I(t)) on the other hand is determined, and the curve of said correlation is compared to a pre-recorded curve of this kind, and if the differences between the two curves exceed a pre-set value, an error message is issued.

7. Control device according to any of the above claims, **characterized** that a rate of change (W, W1) of the sum signal at the monitoring device (const, extr) is measured directly or indirectly during the welding time (tS) and, depending on whether a pre-set rate of change (WN) is exceeded or undercut, a rate of rise (N) of the electric current increase and/or a maximum electric current (IM) is pre-set either reduced or increased for the welding current generator (IS).

8. Control device according to any of the above claims, **characterized in that** in an electric motor drive system, that is self-locking in reverse, the rate of change (W W1) of the pressure measured signal (P(t)) and/or the bending measured signal (B(t)) is measured directly or indirectly and, depending on whether a pre-set rate of change (WN) is exceeded or undercut, a rate of rise (N) of the electric current increase and/or a maximum electric current (IM) is pre-set either reduced or increased, and the welding current (ISS) is switched off earlier or later relative to the occurrence of a maximum (Smax) at the monitoring device, and is pre-set accordingly for the next welding process.

9. Control device according to any of the above claims, **characterized in that** in the and/or subsequent closed state the motor current (MAI) is controlled in such a way that a welding electrode distance (CTS), which is constantly determined by a summation of the resolver signals (RES), is held nearly constant or in accordance with a pre-set time curve.

10. Control device according to claim 9, **characterized in that** a variation over time of the motor current measured signal (I(t)) is stored in a memory (MEM), and is provided for subsequent welding processes as a motor current target value component (I(t)h) respectively, and the formed target current value that is formed additionally with it determines the motor current (MAI) via a motor current controller.

11. Control device according to claim 1, **characterized in that** the control device (MP) is a microprocessor, in which are implemented, controlled by programs, the monitoring device(const, max), the holding timer unit (CTT), a state storage (FF) and a conversion state-to-control-signals for the welding current generator (IS) and the motor current (MAI), to which are transmitted, via input means, a keypad (TA) and/or a data line (DL), the respective parameters: normalization values (NO) and limits (Lim) and position instructions (psoll).

12. Control device according to claim 11, **characterized in that** the microprocessor (MP) is connected at its output side with a display device (D), on which a variation of current over time (I(t)), a variation of a welding electrode distance over time (CTS), which is constantly determined by a summation of the resolver signals (RES) and the sum signal in the closed states, and exceedance of pre-set limits (Lim) are visualized numerically and/or graphically.

13. Control device according to any of the above claims, **characterized in that** the welding current generator (IS) is actuated in such a way that the supplied welding current (ISS) increases time-delayed to a pre-set maximum current (IM).

14. Control device according to any of the above claims, **characterized in that** the sum signal is monitored by the monitoring device (const, extr) for an abrupt change close to or after the end of the welding current supply and an error message is issued when it occurs and a greater delay in the welding current increase and/or a stepped reduction of the maximum current (IM) is pre-set for a subsequent welding cycle.

## Revendications

1. Dispositif de commande de soudage par points avec une pince à souder (Z), dont les électrodes de soudage (E1, E2) sont maintenues sur des bras de pince et sont reliées à un générateur de courant de soudage (IS), ladite pince (Z) étant ouverte et fermée par un moteur électrique (M) comprenant un résolveur (RES), dont le signal est utilisé par un dispositif de commande (MP) pour contrôler la pince à souder (Z) conformément à des instructions (psoll), et ladite pince à souder (Z), en l'état fermé, maintenant des objets pour le soudage (B1, B2) entre les électrodes de soudage (E1, E2) au moyen d'un courant de moteur (MAI) préréglé, dans lequel le générateur de courant de soudage (IS) est temporairement activé par le dispositif de commande (MP), et dans lequel le dispositif de commande (MP) comprend des dispositifs de surveillance (const, max), auxquels les signaux de résolveur (RES) et / ou un signal de mesure de courant de moteur (I (t)) sont constamment alimentés, et dans lequel une transmission à broche (SG), sur son côté de sortie, porte un capteur de pression (DS), dont le signal de mesure de pression (P (t)) est converti de l'analogique au numérique, filtré et normalisé, puis également transmis au un dispositif de surveillance (const, max), qui analyse la variation dans le temps de celui-ci et l'utilise pour commander le générateur de courant de soudage (IS), et dans le cas que, après un signal de fermeture pour la pince de soudage (Z), un état quasi-constant est détecté par ce dispositif de surveillance (const), un état premier est enregistré en tant qu'état fermé et le générateur de courant de soudage (IS) est activé, et par la suite, dans le cas que le dépassement d'une valeur maximum est signalé par le dispositif de surveillance (max), un état fermée subséquent est enregistré, dans lequel le générateur de courant de soudage (IS) est désactivé et un temporisateur d'arrêt (CTT) est activé, après l'expiration (end) duquel l'état fermé subséquent est fini et la contrôle d'ouverture et de fermeture est à nouveau activée, **caractérisé en ce que** les électrodes de soudage (E1, E2) sont maintenues chacune sur un bras de pince, que sur au moins un de ces bras un capteur de flexion (BS1) est situé, le signal de mesure de flexion (B (t)) duquel est converti de l'analogique au numérique, filtré et normalisé, puis également transmis à un dispositif de surveillance (const, max), et un signal composite est formé dans le dispositif de surveillance (const, extr), qui se compose du signal de mesure de pression (P (t)) normalisé, du signal de résolveur (RES), du signal de mesure de courant (I (t)) normalisé et du signal de mesure de flexion (B (t)) normalisé.

2. Dispositif de commande selon la revendication 1, **caractérisé en ce que**, pendant une série de processus de soudage pour l'adaptation des paramètres, le maximum de courant électrique (IM) est augmentée par étapes, avec chaque processus de soudage, jusqu'à la survenance d'un changement brusque dans les signaux d'entrée (RES, I(t), P (t), B (t)) ou dans leurs signaux composites, sur quoi le dispositif de surveillance (const, extr) signale un dérangement, après quoi le maximum de courant électrique (IM) est préréglé plus bas pour les processus de soudage suivants.

3. Dispositif de commande selon l'une des revendications précédentes, **caractérisé en ce qu'**après la fermeture de la pince à souder (Z) le générateur de courant de soudage (IS) fournit au moins une impulsion de courant de chauffage (IH1-IH3), dans lequel une réduction du signal composite est surveillée par le dispositif de surveillance (const, extr), et lorsque le signal composite est réduit de moins d'un temps prédéfini, le générateur de courant de soudage (IS) n'émit plus d'impulsions de courant de chauffage (IH2, IH3), mais le courant de soudage (ISS).

4. Dispositif de commande selon l'une des revendications précédentes, **caractérisé en ce qu'**une vitesse de variation (W, W1) du signal composite est mesurée directement ou indirectement au niveau du dispositif de surveillance (const, extr) pendant la période de soudure (tS), et si une vitesse de variation préréglée (WN) est dépassée ou n'est pas atteinte, le courant de soudage (ISS) est éteint plus tôt ou plus tard par rapport à la survenance d'un maximum (Smax) du signal composite au niveau du dispositif de surveillance (const, extr), et est préréglé ainsi pour le processus de soudage suivant.

5. Dispositif de commande selon l'une des revendications précédentes, **caractérisé en ce que**, lorsque les électrodes de soudage sphériques (E1, E2) sont utilisées, une réduction du signal composite est surveillée au niveau du dispositif de surveillance (const, extr) dans une période initiale d'une période de soudure (tS), et le montant et le minutage de cette réduction sont utilisés comme critères de contrôle pour la variation du courant de soudage (ISS).

6. Dispositif de commande selon l'une des revendications précédentes, **caractérisé en ce que** la variation dans le temps de la corrélation entre le signal de mesure de pression (P (t)) et / ou le signal de mesure de flexion (B (t)) d'une part, et la variation dans le temps du courant de moteur (I (t)) d'autre part, est déterminée, et la courbe de cette corrélation est comparée à une telle courbe prédéfinie, et si les différences entre les deux courbes dépassent un montant prédéfini, un message d'erreur est émis.

7. Dispositif de commande selon l'une des revendications précédentes, **caractérisée en ce que** la vitesse de variation (W, W1) du signal composite au niveau du dispositif de surveillance (const, extr) est mesurée directement ou indirectement au cours du temps de soudage (tS) et, si une vitesse de variation (WN) préréglé est dépassée ou n'est pas atteinte, une pente (N) de l'augmentation du courant électrique et / ou un maximum de courant électrique (IM) sont préréglés plus haut ou plus bas pour le générateur de courant de soudage (IS).

8. Dispositif de commande selon l'une des revendications précédentes, **caractérisé en ce que** dans un système de moteur électrique, qui est autobloquant à l'inverse, la vitesse de variation (W, W1) du signal de mesure de pression (P (t)) et / ou du signal de mesure de flexion (B (t)) est mesurée directement ou indirectement et, si la vitesse de variation (WN) préréglée est dépassée ou n'est pas atteinte, une pente (N) de l'augmentation du courant électrique et / ou un maximum de courant électrique (IM) sont préréglés plus haut ou plus bas, et le courant de soudage (ISS) est éteint plus tôt ou plus tard par rapport à la survenance d'un maximum (Smax) au niveau du dispositif de surveillance, et est préréglé ainsi pour le processus de soudage suivant.

9. Dispositif de commande selon l'une des revendications précédentes, **caractérisé en ce que** dans le premier état fermé et / ou dans un état fermé suivant le courant de moteur (MAI) est réglé de telle manière qu'une distance des électrodes de soudage (CTS), qui est constamment déterminée par une sommation des signaux de résolveur (RES), est maintenu à peu près constant ou conforme à une variation dans le temps prédéfini.

10. Dispositif de commande selon la revendication 9, **caractérisé en ce qu'**une variation dans le temps du signal de mesure de courant de moteur (I (t)) est enregistrée dans une mémoire (MEM), et est prévu pour des processus de soudage suivants en tant que composante de valeur prescrite pour le courant de moteur (I (t) h), et la valeur prescrite formée en addition avec celle-ci définit le courant de moteur (MAI) via un régulateur d'intensité de courant de moteur.

11. Dispositif de commande selon la revendication 1, **caractérisé en ce que** le dispositif de commande (MP) est un microprocesseur, dans lequel sont mises en oeuvre, contrôlés par des programmes, le dispositif de surveillance (const, max), un temporisateur d'arrêt (CTT), une mémoire d'état (FF) et une conversion état-à-signaux-de-contrôle pour le générateur de courant de soudage (IS) et le courant de moteur (MAI), et auquel sont transmis, par voie d'un clavier (TA) et / ou une ligne de données (DL), les paramètres respectifs: des valeurs de normalisation (NO), et des limites (Lim), et des instructions de position (psoll).

12. Dispositif de commande selon la revendication 11, **caractérisé en ce que** le microprocesseur (MP) est reliée à son côté de sortie à un dispositif d'affichage, un écran (D), sur lequel une variation dans le temps du courant (I (t)), une variation dans le temps d'une distance d'électrodes de soudage (CTS), qui est constamment déterminée par une sommation des signaux de résolveur (RES) et du signal composite dans les états fermés, ainsi que des dépassements des limites prédéfinies (Lim) sont visualisés de façon numérique et / ou graphique.

13. Dispositif de commande selon l'une des revendications précédentes, **caractérisé en ce que** le générateur de courant de soudage (IS) est actionné de telle manière que le courant de soudage (ISS) fourni par celui-ci est augmenté après un temps de retard jusqu'à un maximum de courant (IM) préréglé.

14. Dispositif de commande selon l'une des revendications précédentes, **caractérisé en ce que** le signal composite est surveillé par le dispositif de surveillance (const, extr) pour détecter un changement brusque directement avant ou après la fin de la fourniture du courant de soudage et, à sa survenance, un message d'erreur est émis et une temps de retard plus important de l'augmentation du courant de soudage et / ou une réduction par étapes du maximum de courant (IM) sont préréglés pour un processus de soudage suivant.
